# EUROPEAN PATENT APPLICATION

(11) **EP 1 871 080 A1**
(43) Date of publication of application: **26.12.2007**
(21) Application number: 06255380.5
(22) Date of filing: 19.10.2006
(51) Int. Cl.: H04M 1/10

(54) **Telephone with magnet**

(30) Priority: 19.06.2006 US 454955
(71) Applicant: Kao, Fei Yin, Hong Kong (CN)
(72) Inventor: Kao, Chuen Lam, Chai Wan, Hong Kong SAR (CN)
(74) Representative: White, Nicholas John

(57) **Abstract**

A land telephone device (100) has a case (110) having a wall (111) and an on/off hook switch (220) operable by a press knob (130) that protrudes from the wall (111) of the case (110). One or more magnets (141 & 142) are provided at the wall (111) of the case (110) for attaching the telephone device (100) onto a support surface by way of magnetic attraction, with its wall (111) facing the support surface such that the press knob (130) for the on/off hook switch (220) is pressed inwards upon engaging the support surface to thereby put the telephone device (100) on hook.

## Description

The present invention relates to a telephone device and in particular to a land telephone device.

### BACKGROUND OF THE INVENTION

Whilst mobile telephones are becoming ever increasingly popular, land telephones and especially corded land telephones remain useful at home in particular by reason of its simplicity and durability and little maintenance is required.

The invention seeks to provide a new or otherwise improved land telephone that is more convenient to use.

### SUMMARY OF THE INVENTION

According to the invention, there is provided a land telephone device comprising a case having a wall and an on/off hook switch operable by an operating member that protrudes from the wall of the case. At least one magnet is provided at the wall of the case for attaching the telephone device onto a support surface by way of magnetic attraction, with its wall facing said support surface such that the operating member for the on/off hook switch is pressed inwards upon engaging said support surface to thereby put the telephone device on hook.

Preferably, one said magnet is provided adjacent the operating member.

It is preferred that said at least one magnet is fixed on an inner surface of the wall of the case.

Preferably, the case has opposite end portions, including at least two said magnets which are provided at or adjacent the opposite end portions of the case.

It is preferred that the land telephone device includes a keypad provided on the wall of the case.

Preferably, the land telephone device includes a telephone circuit mounted on a circuit board in the case, which includes the on/off hook switch that is mounted on the circuit board.

More preferably, the operating member is distinct from the on/off hook switch and is mounted adjacent the on/off hook switch for operating the same.

Further more preferably, the operating member is mounted on the wall of the case, having a part passing through the wall.

Yet further more preferably, the part of the operating member is resiliently biased by a spring to protrude from the wall of the case.

In a preferred embodiment, the on/off hook switch includes a switching member that comprises a spring-loaded lever arranged for pivotal movement by the operating member to operate the on/off hook switch.

In a preferred embodiment, the land telephone includes a telephone cord for connection to a telephone line.

### BRIEF DESCRIPTION OF DRAWINGS

The invention will now be more particularly described, by way of example only, with reference to the accompanying drawings, in which:

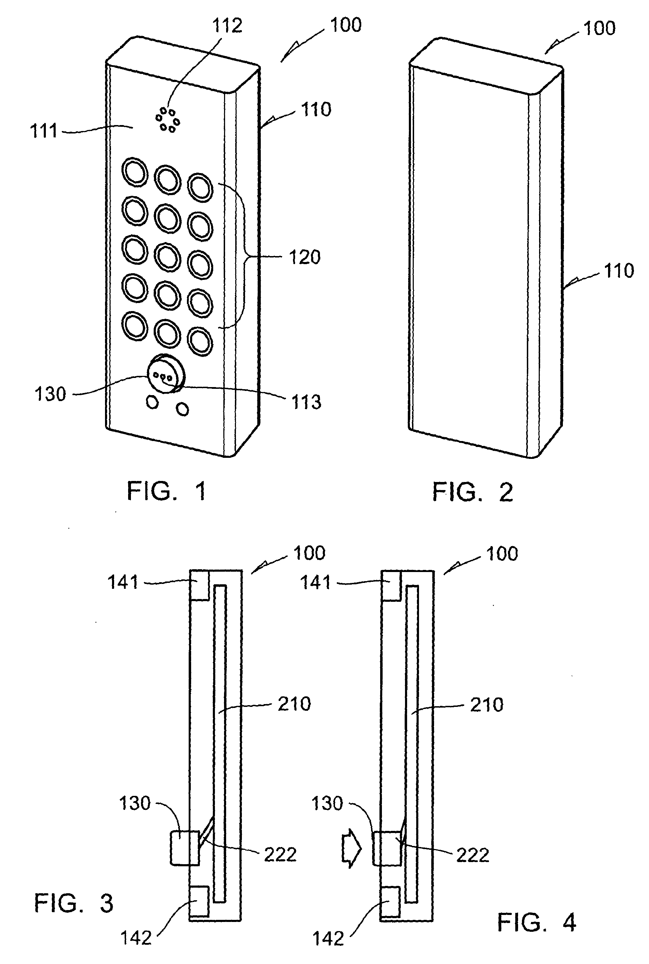

Figure 1 is a front perspective view of an embodiment of a land telephone device in accordance with the invention, showing a front wall on which there are a keypad and an operating member for operating an internal on/off hook switch;
Figure 2 is a rear perspective view of telephone device of Figure 1;
Figure 3 is a schematic cross-sectional side view of the telephone device of Figure 1, showing the on/off hook switch adjacent the operating member;
Figure 4 is a schematic cross-sectional side view similar to Figure 3, showing the operating member operating the on/off hook switch;

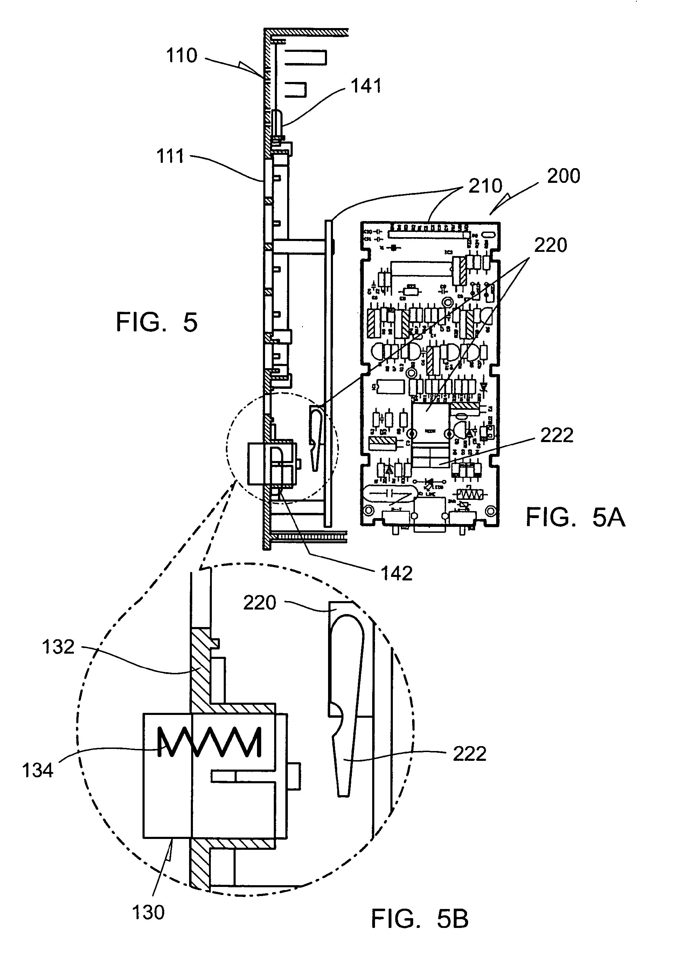

Figure 5 is an internal side view of the telephone device corresponding to Figure 3, including a telephone circuit on a circuit board;
Figure 5A is a front view of the circuit board of Figure 5;
Figure 5B is an enlarged part of Figure 5, showing the on/off hook switch adjacent the operating member;

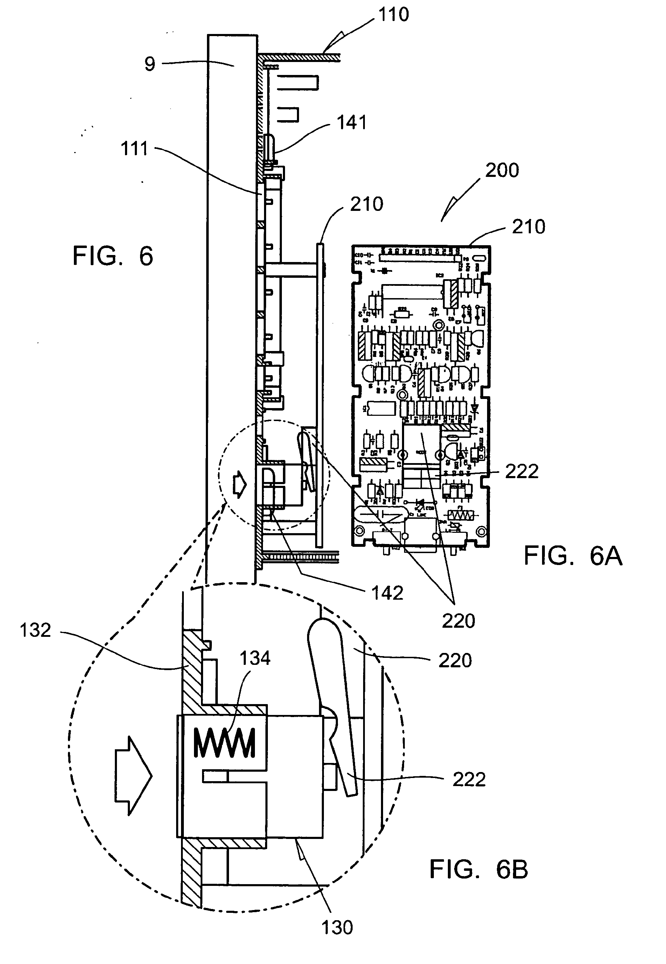

Figure 6 is an internal side view of the telephone device corresponding to Figure 4, including a telephone circuit on a circuit board;
Figure 6A is a front view of the circuit board of Figure 6; and
Figure 6B is an enlarged part of Figure 6, showing the operating member operating the on/off hook switch.

### DETAILED DESCRIPTION OF PREFERRED EMBODIMENT

Referring to the drawings, there is shown a land telephone device 100 embodying the invention, which is in itself a complete telephone that can simply be connected by means of a telephone cord to a telephone line via a telephone socket for immediate use. As the telephone (device) 100 can obtain power directly from the telephone line, no extra wire connection or accessory is needed.

The telephone 100 has a generally flat rectangular upright case 110 designed for use by hand as a handset. The case 110 has a flat front wall/side 111 on which there are an alphanumeric keypad 120 typical for telephones and a press knob 130 below the keypad 120 for operating an internal on/off hook switch 220. Six small holes 112 through the front wall 111, at an upper end of the case 110, permit operation of an internal speaker. The press knob 130 protrudes from the front wall 111 at a lower end of the case 110, and it has three small holes 113 to allow an internal microphone to function.

The telephone 100 includes two permanent magnets 141 and 142 which are fixed on the inner surface of the front wall 111 of the case 110, centrally at or adjacent opposite upper and lower end portions thereof. The magnets 141 and 142 serve to attach the case 110 onto a support surface 9, such as a white board or the side of a refrigerator or computer case, by way of magnetic attraction, with its front wall 111 facing and lying against the support surface 9 such that the press knob 130 for the on/off hook switch 220 is pressed inwards upon engaging the support surface 9 to thereby put the telephone 100 on hook. The lower magnet 142 is located as close as possible to the press knob 130 to ensure maximum force upon attachment to a support surface for pressing knob 130.

The keys of the keypad 120 are feather-touch keys and they are flat, i.e. lying flush with or not protruding from the front side 111 of the case 110, such that attachment of the case 110 onto a refrigerator for example as described above will not cause unintended pressing of any of the keypad keys. If the keys are raised buttons, the middle part of the front side 111 where the keypad 120 is may be made recessed to accommodate the thickness of the keys to avoid unintended pressing.

The telephone circuit of the telephone 100, which is designated by reference numeral 200, is mounted on a circuit board 210 in the case 110, and it includes the on/off hook switch 220 that is likewise mounted on the circuit board 210. The aforesaid speaker and microphone are parts of the telephone circuit 200, and other standard telephone components include dialing circuit, ringing circuit and line interface, etc., as is generally known in the art.

The on/off hook switch 220 incorporates a switching member for operation, in the form of a spring-loaded lever 222 which extends laterally from one (lower) side of the hook switch 220 for pivotal movement by the press knob 130 to operate the hook switch 220. The hook switch 220 has a normal condition that puts the telephone 100 off hook ready for making or receiving a call, which is inhibited by pressing the press knob 130 or having it pressed.

The press knob 130 is a distinct and separate member from the on/off hook switch 220. It is supported by an individual square collar 132 fixed on the inner surface of the front wall 111 of the case 110, at a position close to the on/off hook switch 220, for sliding movement to operate the hook switch 220 immediately behind it. The press knob 130 passes through a matching aperture through the case wall 111, and is resiliently biased by an internal spring 134 to protrude outwardly from the wall 111 such that it is normally raised to release the on/off hook switch 220.

Upon placing of the telephone 100 onto the wall 9 of a refrigerator (for example), with its front side 111 facing the refrigerator, the internal magnets 141 and 142 will immediately hold the telephone 100 (by its case 110) in position on the wall by way of magnetic attraction. As the case 110 is getting close to the refrigerator wall, the press knob 130 is pressed inwards upon engaging the wall to pivot the lever 222 and hence operate the on/off hook switch 220, and this puts the telephone 100 on hook.

The telephone 100 then stays on the refrigerator in a standby mode ready for making or receiving another call. Detachment or removal of the telephone 100 from the refrigerator wall 9 will automatically release the press knob 130 and in turn the on/off hook switch 220, which then puts the telephone 100 off hook for operation.

The telephone 100 of the present invention is convenient to use as it can be attached onto a nearby ferromagnetic metal surface without occupying desktop or worktop space, at a location where there is a white board or a refrigerator whose surface is often used as a white board or there is a personal computer (computer case) and at such a location a telephone is handy and normally installed (a telephone socket is usually available).

The invention has been given by way of example only, and various modifications of and/or alterations to the described embodiment may be made by persons skilled in the art without departing from the scope of the invention as specified in the appended claims.

## Claims

1. A land telephone device comprising:
a case having a wall; and
an on/off hook switch operable by an operating member that protrudes from the wall of the case;
**characterized in that** at least one magnet is provided at the wall of the case for attaching the telephone device onto a support surface by way of magnetic attraction, with its wall facing said support surface such that the operating member for the on/off hook switch is pressed inwards upon engaging said support surface to thereby put the telephone device on hook.

2. The land telephone device as claimed in claim 1, **characterized in that** one said magnet is provided adjacent the operating member.

3. The land telephone device as claimed in claim 1, **characterized in that** said at least one magnet is fixed on an inner surface of the wall of the case.

4. The land telephone device as claimed in any one of claims 1 to 3, **characterized in that** the case has opposite end portions, including at least two said magnets which are provided at or adjacent the opposite end portions of the case.

5. The land telephone device as claimed in any one of claims 1 to 3, **characterized in that** it includes a keypad provided on the wall of the case.

6. The land telephone device as claimed in any one of claims 1 to 3, **characterized in that** it includes a telephone circuit mounted on a circuit board in the case, which includes the on/off hook switch that is mounted on the circuit board.

7. The land telephone device as claimed in claim 6, **characterized in that** the operating member is distinct from the on/off hook switch and is mounted adjacent the on/off hook switch for operating the same.

8. The land telephone device as claimed in claim 7, **characterized in that** the operating member is mounted on the wall of the case, having a part passing through the wall.

9. The land telephone device as claimed in claim 8, **characterized in that** the part of the operating member is resiliently biased by a spring to protrude from the wall of the case.

10. The land telephone device as claimed in claim 7, **characterized in that** the on/off hook switch includes a switching member that comprises a spring-loaded lever arranged for pivotal movement by the operating member to operate the on/off hook switch.

11. The land telephone device as claimed in any one of claims 1 to 3, **characterized in that** it includes a telephone cord for connection to a telephone line.
